# FASCICULE DE BREVET EUROPEEN

(11) **EP 1 493 958 B1**
(45) Date de publication et mention de la délivrance du brevet: **24.05.2006**
(21) Numéro de dépôt: 04291569.4
(22) Date de dépôt: 22.06.2004
(51) Int. Cl.: F16L 21/02

(54) **Joint annulaire pour raccord de transfert de fluide et raccord équipé d'un tel joint**
Ringförmige Dichtung für Fluidtransferkupplung und Kupplung mit einer solchen Dichtung
Annular seal for fluid transfer connector and connector equiped with such a seal

(30) Priorité: 01.07.2003 FR 0307970
(43) Date de publication de la demande: 05.01.2005
(73) Titulaire: LE JOINT FRANCAIS, 75008 Paris (FR)
(72) Inventeur: Travers, Thierry, 53200 St Fort (FR)
(74) Mandataire: Schwartz, Thierry J.

(56) Documents cités:
- EP-A- 1 096 182
- FR-A- 2 806 144
- US-A- 4 304 415

## Description

L'invention se rapporte à un joint annulaire d'étanchéité pour raccord, ainsi que le raccord obtenu pour un embout de conduit transportant un fluide, tel que de l'air, de l'huile, de l'eau ou des carburants (essence, gasoil, etc.).

L'invention s'applique notamment mais non exclusivement aux raccords de transfert de fluide (air, eau, liquide de frein, etc.) dans le domaine automobile, et plus particulièrement sous le capot moteur des véhicules.

Les raccords automobiles destinés à transférer un fluide se développent car ils permettent un temps de montage réduit sur chaîne et donc un gain pour le constructeur, en particulier le transfert de l'air (filtrage, turbo, recyclage des gaz brûlés ou EGR, etc.). Ces fonctions nécessitent des raccords étanches de transfert des fluides dans le capot moteur entre une conduite d'amenée présentant un embout et une tubulure de liaison au moteur.

Les constructeurs de raccord souhaitent fabriquer leurs pièces avec des technologies peu coûteuses et dans un espace restreint. Ils réalisent donc généralement des pièces roulées comportant de grands rayons de courbure en fond de gorge pour loger les joints d'étanchéité.

Les joints toriques utilisés actuellement génèrent des efforts de montage élevés et des coûts de fabrication peu économiques lorsque les dimensions de raccord sont élevées.

Par ailleurs, les joints à lèvre ne sont pas adaptés aux raccords de support de transfert de fluide qui présentent de grands rayons de courbure. De plus, son coût est généralement élevé et il est dissymétrique : son montage doit respecter un sens et les risques défaillance ne sont négligeables. Un autre type de joint pour de telles applications est montré dans le document US-A-4304415.

Il existe également des joints quadrilobes, par exemple tel que défini dans le document EP-A-1096182**.** Ces joints ne permettent pas d'obtenir un taux d'écrasement suffisant des lobes en fond de gorge, lorsque les lobes sont dimensionnés pour une gorge d'ouverture donnée et dont le fond est nécessairement plus étroit. Ainsi, ces joints ne permettent pas de réaliser le raccord avec la seule déformation des lobes externes ni d'absorber suffisamment les tolérances dimensionnelles de fond de gorge. Ainsi de tels joints imposent une augmentation sensible des efforts de montage axiaux.

Le but de l'invention est donc de permettre la réalisation d'un raccord où les efforts axiaux de montage du joint sont faibles (des efforts de montage situés par exemple entre 60 et 80 N compatibles avec un montage manuel du raccord) alors que le raccord est de grande dimension, par exemple de diamètre supérieur à 30 mm et pouvant atteindre 60 à 70 mm.

En particulier, l'invention vise un montage de joint sur gorge roulée dit « montage dans l'alésage » avec des efforts axiaux réduits.

Pour atteindre ce but, l'invention propose de réaliser un joint dont l'enveloppe présente en coupe un appui en fond de gorge de dimension inférieure à l'appui sur l'embout d'amenée du fluide.

Plus précisément, la présente invention a pour objet un joint annulaire pour raccord de transfert de fluide entre un embout de conduite d'amenée et une tubulure de liaison, ce raccord comportant une gorge annulaire pour loger le joint présentant une face d'appui sur le fond de gorge et une face d'appui sur l'embout, et la gorge possédant une ouverture et un fond de gorge sensiblement plan de dimension inférieure à son ouverture. Le joint présente en coupe une face d'appui sur le fond de gorge de dimension inférieure à la face d'appui de raccord sur l'embout, les largeurs des faces d'appui de fond et de raccord étant déterminées respectivement en fonction des dimensions de fond et d'ouverture de gorge. Le joint est de type quadrilobe présentant en coupe une forme en "X" avec une enveloppe de forme sensiblement trapézoïdale, de préférence un trapèze isocèle, avec deux lobes de fond de gorge formant la face d'appui sur fond de gorge et correspondant à la petite base du trapèze, alors que deux lobes de contact forment la face d'appui sur embout et correspondent à la grande base.

Selon des modes de réalisation particuliers :
- le rapport des hauteurs radiales entre les bases du trapèze (hauteur du trapèze) et entre les fonds de lobes (hauteur minimale du joint) est réglé par les dimensions de la gorge pour réaliser un raccord sans écrasement du joint allant au-delà de la déformation des lobes ;
- le rapport des hauteurs radiales est situé dans la fourchette 60-70%, de préférence sensiblement égal à 70% ;
- le rapport de gabarit entre la hauteur du joint et la largeur de sa face d'appui en embout est compris entre environ 1 et 0,55.

Les joints selon l'invention déclinés par homothétie peuvent couvrir une grande plage de tailles, sans que les lobes n'atteignent une épaisseur inférieure à 0,3 mm, calculée entre les points d'inflexion, afin de couvrir des tolérances dimensionnelles élevées.

Avantageusement, le joint selon l'invention est réalisé à partir d'un moule présentant deux parties symétriques. Ainsi la majoration du coût est minimisée par rapport à la réalisation d'un joint torique.

L'invention se rapporte également à un raccord entre un embout de conduite d'amenée de fluide et une tubulure de liaison, comportant une gorge annulaire apte à loger le joint présentant les caractéristiques indiquées ci-dessus.

Selon un mode de réalisation particulier, le rapport entre l'ouverture de la gorge et la largeur du joint définie entre les lobes de fond de gorge, est sensiblement égal à 0,7.

Les raccords selon l'invention sont de préférence de type encliquetable.

Les raccords sont de type dans l'alésage lorsque l'embout pénètre la tubulure de liaison ou de type sur l'arbre lorsque l'embout entoure la tubulure formant arbre de liaison. Dans ce dernier cas, le trapèze du joint est inversé par rapport à l'axe du raccord, la petite base étant du côté de l'axe.

D'autres caractéristiques et avantages de l'invention apparaîtront à la description qui suit relative à un exemple détaillé, en référence aux figures annexées, qui représentent respectivement :
- la figure 1, une vue en coupe longitudinale d'un raccord comportant une gorge logeant un joint en montage dans l'alésage selon l'invention, avant l'introduction de l'embout du conduit d'air à raccorder ; et
- la figure 2, une vue du même type après raccordement de l'embout.

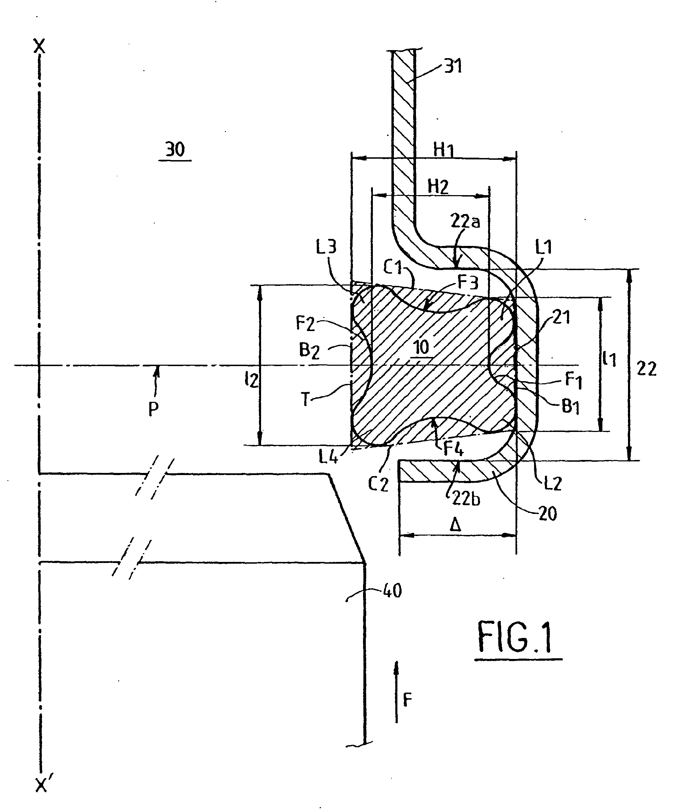

En référence à la vue en coupe longitudinale de la figure 1, un exemple de joint annulaire 10 conforme à l'invention est logé dans une gorge annulaire 20 de type roulée. Le joint est en caoutchouc naturel ou synthétique. Ce joint est destiné à réaliser un raccord selon un montage dans l'alésage 30 de la tubulure de liaison 31, sous le capot moteur d'un véhicule. L'alésage 30 de liaison a un diamètre interne d'environ 46,5 mm dans l'exemple.

Un embout 40 de conduite d'air est dirigé dans l'alésage en direction (flèche F) de la tubulure 31 pour réaliser un raccord par encliquetage sur la gorge 20. L'embout peut être en acier ou en matériau plastique. Le système d'encliquetage est connu de l'homme de l'art et n'est pas représenté. Le joint, la gorge, l'embout et la tubulure ont un axe central commun X'X de symétrie axiale.

La gorge annulaire 20 possède deux parois radiales 22a et 22b parallèles, formant une ouverture 22 constante, de 4,4 mm sur une profondeur Δ. Le fond de gorge axial 21 sensiblement plan de largeur 3,05 mm vient se raccorder aux parois radiales par deux congés de 1 mm de rayon de courbure. Le fond de gorge est en métal formé.

Le joint 10 présente une face d'appui F1 sur le fond 21 de la gorge 20, une face d'appui F2 devant coopérer avec l'embout 40, et deux faces latérales, F3 et F4. L'ensemble de ces faces s'inscrit en coupe dans un trapèze isocèle T formé d'une petite base B1, coïncidant sensiblement avec le fond de gorge 21 lorsque le joint et logé dans la gorge, d'une grande base B2, en regard de la petite base B1, et deux côtés latéraux, C1 et C2, symétriques selon un plan transversal P de symétrie du joint 10.

Le joint 10 est un joint quadrilobe, L1 à L4, présentant en coupe une forme en "X" qui s'inscrit dans l'enveloppe trapézoïdale T.

La face d'appui F1 de fond du joint se compose, dans cet exemple de réalisation, de deux lèvres formant, en coupe, deux lobes L1 et L2 symétriques par rapport au plan P et définissant une largeur I1 de face d'appui de fond de 3,05 mm. De façon similaire, la face d'appui F2 de raccord sur l'embout 40 se compose, dans cet exemple de réalisation, de deux lèvres formant, en coupe, deux lobes symétriques L3 et L4 et définissant une largeur I2 de face d'appui d'embout de 3,65 mm, supérieure à la largeur de face de fond I1 du fait de la forme trapézoïdale du joint. Les valeurs de I1 et I2 sont calculées en fonction des dimensions de la gorge 20, à savoir respectivement de son fond 21 et de son ouverture 22.

Le joint 10 présente radialement deux hauteurs : une hauteur de joint H1, hauteur du trapèze (correspondant à la distance entre les bases du trapèze), - égale à 3,40 mm dans l'exemple de réalisation -, et une hauteur au fond de lobes H2 correspondant à la distance minimale entre les faces d'appui, ici égale à 2,39 mm. Le rapport entre les hauteurs radiales est dans l'exemple d'environ 70%.

Ce rapport est calculé en fonction des tolérances sur les dimensions de fond de gorge 21, ainsi que sur les grandeurs spécifiques liées au raccord à réaliser : la hauteur du joint H1, l'alésage 30 et le diamètre de l'embout 40, l'embout 40 étant guidé dans l'alésage 30. En fonction de ces tolérances, une fourchette de serrage du joint est alors définie. Par exemple, un serrage nominal de 15% du joint, correspondant à un effort de 60 N sur l'axe, pour des serrages extrêmes de 3% (effort de 40 N) au minimum et de 28% au maximum (90 N d'effort). Dans cet exemple, la fourchette de serrage est donc de 25%, ce qui définit le rapport des hauteurs de joint à environ 70% pour éviter un écrasement central du joint.

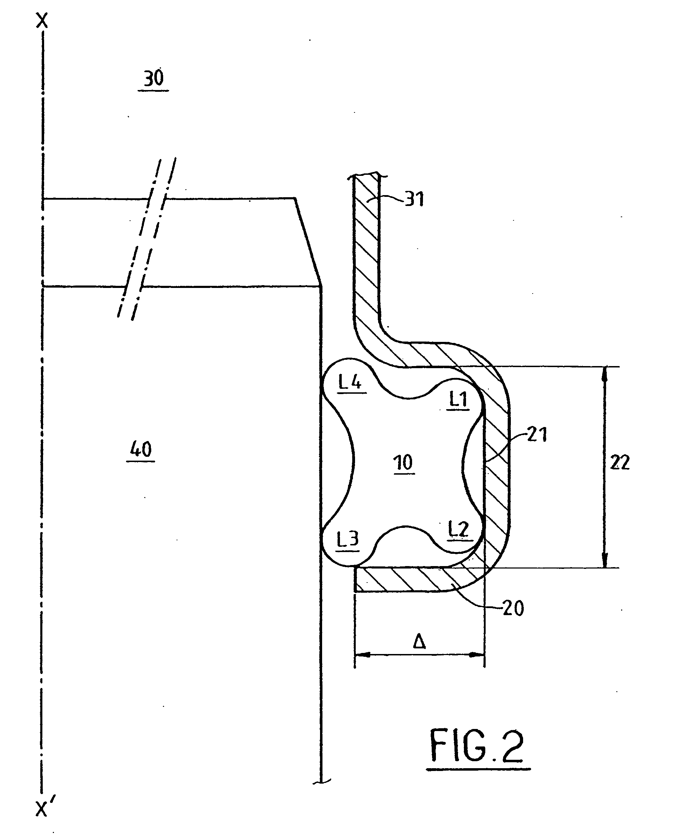

Dans ces conditions, et comme illustré par la figure 2, le raccord est effectué sans écrasement du joint 10 allant au-delà de la déformation des lobes L1 à L4 lorsque le conduit d'air est raccordé, le joint étant en appui sur l'embout 40.

Afin d'exercer des efforts réduits lors de l'introduction et du passage de l'embout 40 sur le joint 10, le rapport de gabarit défini entre la hauteur H1 du joint et la largeur d'embout I2 du joint est avantageusement égal à environ 0,9.

Le joint est réalisé dans l'exemple à partir d'un moule présentant deux demi-coques identiques pour réaliser deux demi-joints symétriques à travers le plan de symétrie transversale P, l'ensemble formant le joint décrit ci-dessus.

L'invention n'est pas limitée aux exemples de réalisation décrits et illustrés, tous les équivalents techniques des moyens évoqués étant dans son champ de définition. Par exemple, la face d'appui d'embout peut être formée d'une lèvre multiple de type « poly-V ». Le trapèze enveloppe peut être rectangle du côté de l'entrée de l'embout à racccorder ou, plus généralement, quelconque.

## Revendications

1. Joint annulaire pour raccord de transfert de fluide entre un embout (40) de conduite d'amenée et une tubulure de liaison (31), ce raccord comportant une gorge annulaire (20) pour loger le joint (10) présentant une face d'appui (F1) sur le fond de gorge et une face d'appui (F2) sur l'embout, la gorge (20) possédant une ouverture (22) et un fond de gorge (21) sensiblement plan de dimension inférieure à l'ouverture (22), le joint présentant en coupe une face d'appui (F1) sur le fond de gorge de dimension inférieure à la face d'appui (F2) de raccord sur l'embout, les largeurs (I1, I2) des faces d'appui de fond et de raccord étant déterminées respectivement en fonction des dimensions de fond (21) et d'ouverture (22) de gorge, **caractérisé en ce qu'**il est du type quadrilobe présentant en coupe une forme en "X" avec une enveloppe de forme sensiblement trapézoïdale, de préférence un trapèze isocèle (T), avec deux lobes (L1, L2) de fond de gorge formant la face d'appui (F1) sur fond de gorge et correspondant à la petite base (B1) du trapèze (T), alors que deux lobes de contact (L3, L4) forment la face d'appui (F2) sur embout et correspondent à la grande base (B2).

2. Joint annulaire selon la revendication précédente, dans lequel le rapport des hauteurs radiales entre les bases du trapèze (H1) et entre les fonds de lobes (H2) est réglé par les dimensions (22, Δ, 21) de la gorge (20) pour réaliser un raccord sans écrasement du joint (10) allant au-delà de la déformation des lobes (L1 à L4).

3. Joint annulaire selon la revendication précédente, dans lequel le rapport des hauteurs radiales (H1, H2) est situé dans la fourchette 60-70%, de préférence sensiblement égal à 70%.

4. Joint annulaire selon l'une quelconque des revendications précédentes, dans lequel le rapport de gabarit entre la hauteur du joint (H1) et la largeur (I2) de sa face d'appui en embout est compris entre environ 1 et 0,55.

5. Procédé d'obtention d'un joint selon l'une quelconque des revendications précédentes, **caractérisé en ce que** ledit joint est réalisé à partir d'un moule présentant deux parties symétriques.

6. Raccord d'étanchéité entre un embout (40) de conduite d'amenée de fluide et une tubulure de liaison (31), comportant un joint (10) selon l'une quelconque des revendications 1 à 4 et une gorge annulaire (20) apte à loger ledit joint.

7. Raccord selon la revendication précédente, dans lequel le rapport entre l'ouverture (22) de la gorge (20) et la largeur (I1) du joint définie entre les lobes de fond de gorge, est sensiblement égale à 0,7.

8. Raccord selon la revendication 6 ou 7, **caractérisé en ce qu'**il est de type encliquetable.

9. Raccord selon l'une quelconque des revendications 6 à 8, **caractérisé en ce qu'**il est de type dans l'alésage, lorsque l'embout pénètre la tubulure de liaison, ou de type sur l'arbre, lorsque l'embout entoure la tubulure formant arbre de liaison.

## Claims

1. An annular gasket for a fluid transfer coupling between a feed pipe endpiece (40) and a connection tube (31), the coupling including an annular groove (20) for receiving the gasket (10), which gasket presents a bearing face (F1) for bearing against the bottom of the groove and a bearing face for bearing (F2) against the endpiece, the groove (20) presenting an opening (22) and a groove bottom (21) that is substantially flat and smaller in size than the opening (22), the gasket presenting in section a bearing face (F1) for bearing against the bottom of the groove that is smaller than its bearing face (F2) for bearing against the endpiece, the widths (I1, 12) of the bottom and endpiece bearing faces being determined respectively as a function of the dimensions of the bottom (21) and of the opening (22) of the groove, **characterized in that** the gasket is of the four-lobe type presenting an X-shaped section with an envelope that is substantially trapezoidal, preferably in the form of an isosceles trapezoid (T), with two groove-bottom lobes (L1, L2) forming the bearing face (F1) for bearing against the bottom of the groove and corresponding to the small base (B1) of the trapezoid (T), and with two contact lobes (L3, L4) forming the bearing face (F2) for bearing against the endpiece and corresponding to the large base (B2).

2. An annular gasket according to the preceding claim, in which the ratio of radial height between the bases of the trapezoid (H1) and between the bottoms of the lobes (H2) is determined by the dimensions (22, Δ, 21) of the groove (20) so as to provide a coupling in which the gasket (10) is not flattened other than by deforming the lobes (L1 to L4).

3. An annular gasket according to the preceding claim, in which the ratio of the radial heights (H1, H2) lies in the range 60% to 70%, and is preferably substantially equal to 70%.

4. An annular gasket according to any preceding claim, in which the size ratio between the height (H1) of the gasket and the width (12) of its face bearing against the endpiece lies in the range approximately 1 to 0.55.

5. Method of obtaining an annular gasket according to any one of the preceding claims, **characterized in that** the gasket is made in a mold presenting two symmetrical portions.

6. A coupling between a fluid feed pipe endpiece (40) and a connection tube (31), including an annular groove (20) suitable for receiving a gasket (10) according to any one of the claims 1 to 4.

7. A coupling according to the preceding claim, in which the ratio between the opening (22) of the groove (20) and the width (I1) of the gasket defined between the bottom-of-groove lobes is substantially equal to 0.7.

8. A coupling according to claim 6 or 7, **characterized in that** it is of the snap-fastening type.

9. A coupling according to any one of claims 6 to 8, **characterized in that** it is of the in-the-bore type, when the endpiece penetrates into the connection tube, or of the on-the-spigot type when the endpiece surrounds the tube forming the connection spigot.

## Patentansprüche

1. Ringdichtung für eine Fluidtransferverbindung zwischen einem Ansatzstück (40) einer Zuführungsleitung und einem Verbindungsstutzen (31), wobei diese Verbindung eine ringförmige Rille (20) umfasst, um die Dichtung (10) aufzunehmen, welche eine Auflagefläche (F1) auf dem Rillenboden und eine Auflagefläche (F2) auf dem Ansatzstück aufweist, wobei die Rille (20) eine Öffnung (22) und einen im Wesentlichen ebenen Rillenboden (21) mit geringerem Ausmaß als die Öffnung (22) besitzt, wobei die Dichtung im Querschnitt eine Auflagefläche (F1) auf dem Rillenboden mit geringerem Ausmaß als die Auflagefläche (F2) der Verbindung an dem Ansatzstück aufweist, wobei die Breiten (11, 12) der Auflageflächen für den Boden und die Verbindung jeweils in Abhängigkeit von den Abmessungen des Bodens (21) und der Öffnung (22) der Rille bestimmt sind, **dadurch gekennzeichnet, dass** sie vom vierlappigen Typ ist, welcher im Querschnitt eine Form eines "X" mit einer Einhüllenden im Wesentlichen in Form eines Trapezes, vorzugsweise eines gleichschenkligen Trapezes (T), aufweist, mit zwei Rillenbodenlappen (L1, L2), welche die Auflagefläche (F1) auf dem Rillenboden bilden und der kleinen Grundseite (B1) des Trapezes (T) entsprechen, während zwei Kontaktlappen (L3, L4) die Auflagefläche (F2) auf dem Ansatzstück bilden und der großen Grundseite (B2) entsprechen.

2. Ringdichtung nach dem vorhergehenden Anspruch, wobei das Verhältnis der radialen Höhen zwischen den Grundseiten des Trapezes (H1) und zwischen den Böden der Lappen (H2) durch die Abmessungen (22, Δ, 21) der Rille (20) bestimmt ist, um eine Verbindung ohne ein Eindrücken der Dichtung (10), welches über die Verformung der Lappen (L1-L4) hinausgeht, zu realisieren.

3. Ringdichtung nach dem vorhergehenden Anspruch, wobei das Verhältnis der radialen Höhen (H1, H2) in der Spanne von 60-70% liegt und vorzugsweise im Wesentlichen gleich 70% ist.

4. Ringdichtung nach einem der vorhergehenden Ansprüche, wobei das Größenverhältnis zwischen der Höhe der Dichtung (H1) und der Breite (12) seiner Auflagefläche an dem Ansatzstück zwischen ungefähr 1 und 0,55 enthalten ist.

5. Verfahren zum Erhalten einer Dichtung nach einem der vorhergehenden Ansprüche, **dadurch gekennzeichnet, dass** die Dichtung ausgehend von einer Form realisiert wird, welche zwei symmetrische Abschnitte aufweist.

6. Abgedichtete Verbindung zwischen einem Ansatzstück (40) einer Fluidzuführungsleitung und einem Verbindungsstutzen (31), umfassend eine Dichtung (10) nach einem der Ansprüche 1-4 und eine ringförmige Rille (20), welche dazu ausgestaltet ist, die Dichtung aufzunehmen.

7. Verbindung nach dem vorhergehenden Anspruch, wobei das Verhältnis zwischen der Öffnung (22) der Rille (20) und der Breite (11) der Dichtung, welche zwischen den Rillenbodenlappen definiert ist, ungefähr gleich 0,7 ist.

8. Verbindung nach Anspruch 6 oder 7, **dadurch gekennzeichnet, dass** sie vom Einrasttyp ist.

9. Verbindung nach einem der Ansprüche 6-8, **dadurch gekennzeichnet, dass** sie vom Typ in der Bohrung ist, wenn das Ansatzstück in den Verbindungsstutzen eindringt, oder vom Typ auf der Achse ist, wenn das Ansatzstück den die Verbindungsachse bildenden Stutzen umgibt.
